# EUROPEAN PATENT SPECIFICATION

(11) **EP 3 262 328 B1**
(45) Date of publication and mention of the grant of the patent: **10.04.2019**
(21) Application number: 15705828.0
(22) Date of filing: 23.02.2015
(51) Int. Cl.: F16K 31/50

(54) **VALVE OPERATOR ASSEMBLY WITH DOUBLE SCREW MECHANISM AND OPERABLE WHEEL**
VENTILBETÄTIGERANORDNUNG MIT ZWEIGÄNGIGEM SCHRAUBENMECHANISMUS UND BEDIENBAREM RAD
ENSEMBLE ACTIONNEUR DE SOUPAPE À MÉCANISME DOUBLE VIS ET À ROUE MANIPULABLE

(43) Date of publication of application: 03.01.2018
(73) Proprietor: Aktiebolaget SKF, 415 50 Göteborg (SE)
(72) Inventor: DUBUS, Jérôme, F-37520 La Riche (FR); BOCH, Christian, F-73000 Chambery (FR)
(74) Representative: Kuhstrebe, Jochen
(86) International application number: PCT/EP2015/053734
(87) International publication number: WO 2016/134742

(56) References cited:
- EP-A1- 1 419 334
- WO-A1-2015/007308

## Description

The present invention relates to the fields of valves and manually operable valves, for instance gate valves, control or regulation valves or chokes valves. More particularly, the invention relates to a valve operator assembly for a gate valve.

Valves are used in a variety of industries to control the flow of fluids. In particular, gate valves are used extensively in the oil and gas industry to control the flow of produced fluids at various stages of production. Most gate valves used in this industry comprise a valve body having a longitudinal flow bore and a transverse gate cavity that intersects the flow bore. A gate having a gate opening extending transversely therethrough is disposed in the gate cavity. A valve stem is provided for moving the gate between an open position, in which the gate opening is aligned with the flow bore, and a closed position, in which the gate opening is offset from the flow bore. The gate cavity of the valve body is covered by a bonnet having an axial bore transverse to the flow through which passes the valve stem.

Such a gate valve is associated to a valve operator assembly for selectively driving the valve stem up and down in order to close and open the gate valve. The valve operator assembly generally comprises a transmission mechanism to convert the rotational motion of a drive input into axial motion of the valve stem. To quickly open and close the gate valve with a minimum number of turns, the transmission mechanism may be a ball screw mechanism or a planetary roller screw mechanism in order to reduce the operating torque, for instance manual hand-wheel torque or powered with electric, hydraulic or pneumatic drive for surface valves or with remote operating vehicle (ROV) torque tool or electric or hydraulic actuation for subsea valves. For more details, it is possible for example to refer to the patent EP-B1-1 419 334 (SKF).

A valve operator assembly according to the preamble of independent claim 1 is known from WO 2015/007308 A1.

Generally, the required axial space for a conventional valve operator assembly is large. Otherwise, when operating a gate valve, the force to apply to the valve stem is maximum at the beginning of the valve opening and also at the end of the valve closing. Then the force to apply is less important and substantially constant. Accordingly, the required operating torque on the rotational wheel, such as a manual hand-wheel, is usually much higher at the start of the valve opening and at the end of the valve closing.

One aim of the present invention is to overcome these drawbacks.

It is a particular object of the present invention to provide a valve operator assembly for valve, for instance gate valve, control or regulation valve or choke valve, having a good axial compactness and wherein the required torque for operating said valve is optimized.

It is also an object of the present invention to provide a valve operator assembly with a limited number of components.

In one embodiment, the valve operator assembly is provided for a valve comprising a valve body and a valve translating member axially moveable. The assembly comprises a housing adapted to be mounted on the valve, an operable wheel an operable wheel rotatably mounted with respect to said housing, and a transmission mechanism comprising a translating screw adapted to be connected to the valve translating member of the valve and provided with an outer thread, and a rotating nut surrounding and coaxial with said screw, said nut being provided with an inner thread. Said transmission mechanism is adapted to convert rotation of said nut into axial translation of said screw. The assembly further comprises an outer sleeve radially disposed between the housing and the nut of the transmission mechanism and provided with an inner thread engaged with an outer thread provided on said nut. The wheel is directly mounted on the outer sleeve.

Thanks to the direct connection of the wheel on the outer sleeve, the required axial space for the valve operator assembly is limited. Besides, the number of components of the assembly is also reduced. The wheel is coupled directly to the outer sleeve. No means are interposed therebetween, such as an adapter sleeve or adapter shaft axially interposed between the wheel and the outer sleeve.

Otherwise, the valve operator assembly has a double lead. A first lead is obtained when the screw is driven by the nut of the transmission mechanism which only has a rotational movement relative to the outer sleeve. A second lead is obtained when the nut moves simultaneously both in the axial and circumferential directions relative to the outer sleeve. This second lead is obtained when the screw is driven by the friction screw means provided between the nut and the outer sleeve. The number of turns required to travel the stroke to open or close is minimized while keeping a low operating torque.

In one embodiment, the outer sleeve comprises a shaft portion onto which is directly mounted the wheel and a tubular portion extending from said shaft and provided with the inner thread, said shaft and tubular portions being formed in one part.

Preferably, the wheel is directly mounted on the outer surface of the outer sleeve. Advantageously, the wheel is directly mounted on a part of the outer surface of the outer sleeve which is located outside of the housing.

In one embodiment, the wheel comprises a mounting hub directly mounted on the outer sleeve and an operable rim connected to said hub. The wheel may be a hand-wheel. Alternatively, the wheel may be an electro-mechanical wheel.

The assembly may further comprise locking means disposed on the outer sleeve and the wheel to secure said wheel to the outer sleeve. In one embodiment, the locking means comprise at least one key engaged in an inner keyway of the outer sleeve and in a corresponding outer keyway of the wheel. Alternatively or in combination, the locking means may comprise at least one screw extending at least into the outer sleeve. Said screw may extend radially or axially. Alternatively or in combination, the locking means may comprise pins or clamps.

In one embodiment, the inner thread of the outer sleeve is engaged with the outer thread provided on the nut of the transmission mechanism.

Preferably, the friction torque induced by the transmission mechanism is smaller than the friction torque induced by the connection between the nut of said mechanism and the outer sleeve.

In one preferred embodiment, the assembly further comprises abutment and coupling means for blocking the translation of the screw of the transmission mechanism relative to the nut and maintaining a coupling state between said nut and said screw. The abutment and coupling means may be secured onto the screw and onto the nut.

The assembly may further comprise abutment means provided for blocking the translation of the nut of the transmission mechanism relative to the outer sleeve.

The transmission mechanism and the connection between the nut of said mechanism and the outer sleeve may be adapted to move the translating screw in the same longitudinal direction when the wheel is rotated in one direction.

In one embodiment, the transmission mechanism further comprises rolling elements radially provided between the outer thread of the screw and the inner thread of the nut. The assembly may further comprise at least one rolling bearing radially provided between the outer sleeve and the housing.

The invention also relates to a valve comprising a valve body, a valve translating member axially moveable and a valve operator assembly as previously defined.

The present invention and its advantages will be better understood by studying the detailed description of a specific embodiment given by way of non-limiting example and illustrated by the appended drawings on which:
- Figure 1 is a cross-section of a valve operator assembly for gate valve according to an example of the invention,
- Figure 2 is a detail view of Figure 1, and
- Figure 3 is a cross-section of the valve operator assembly of Figure 1 at another longitudinal position.

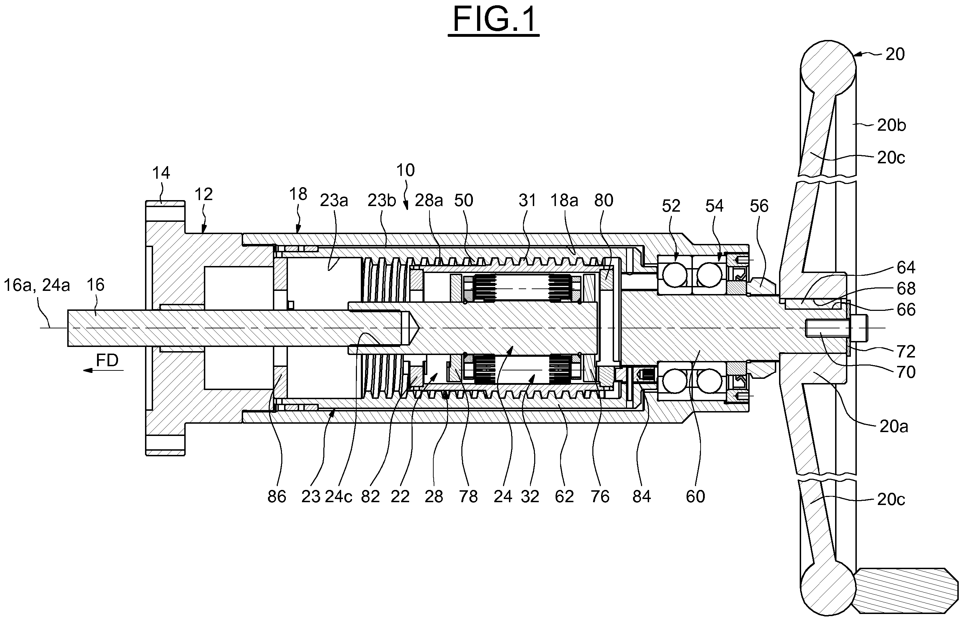

A valve operator assembly 10 as shown on Figure 1 is adapted for a gate valve 12 provided with a bonnet 14, a valve body (not shown) covered by said bonnet and a moveable valve stem 16 with an axis 16a. Conventionally, the valve body has a flow bore and a transverse gate cavity that intersects the flow bore. The gate valve also comprises a gate having a gate opening extending transversely therethrough is disposed in the gate cavity. For more detail on such a gate valve, it could be referred to EP-B1-1 419 334 (SKF).

The valve operator assembly 10 comprises a tubular housing 18 mounted on the bonnet 14 of the gate valve, an input operable wheel 20 rotatably mounted with respect to said housing, and an inverted roller screw mechanism 22 and a rotating and non-translating outer sleeve 23 which are interposed between said wheel and the valve stem 16 of said valve to convert a rotational motion of the wheel 20 into axial motion of the valve stem.

The inverted roller screw mechanism 22 is mounted into a bore 18a of the housing. One axial end of the housing 18 is secured to the bonnet 14 by threads or bolts. In the illustrated example, the bore 18a has a stepped form. Alternatively, the bore 18a may have different shape.

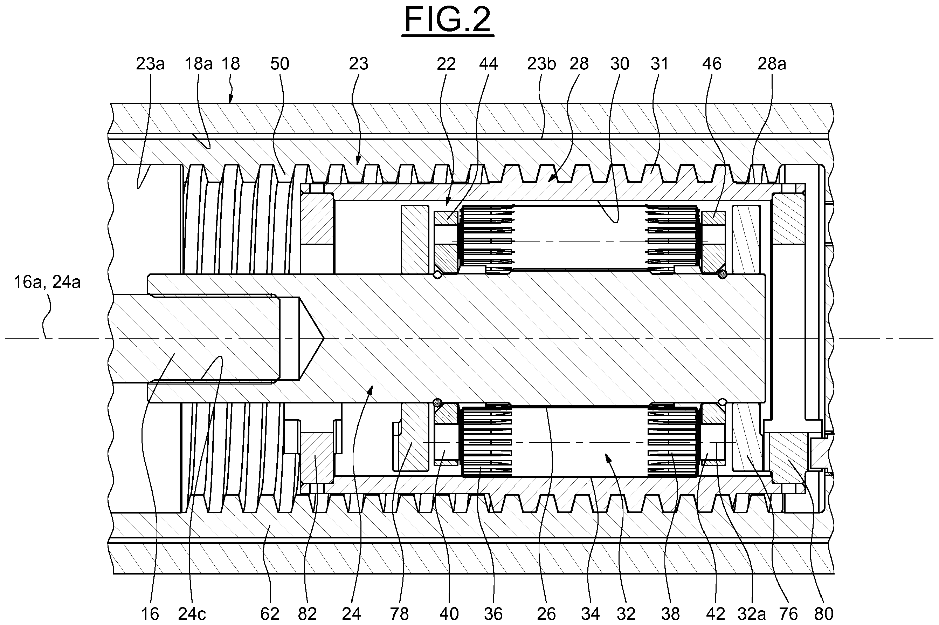

As shown more clearly on Figure 2, the mechanism 22 comprises a screw 24, with an axis 24a coaxial with the axis of the valve stem, provided with an outer thread 26, a nut 28 mounted coaxially about the screw 24 and provided with an inner thread 30, the internal diameter of which is greater than the external diameter of the outer thread 26, and a plurality of longitudinal rollers 32 arranged radially between the screw 24 and the nut 28. The screw 24 extends longitudinally through a cylindrical bore of the nut 28 on which the inner thread 30 is formed. The lead of the outer thread 26 of the screw is constant.

The nut 28 has a tubular form. The nut 28 is made in one part. The nut 28 extends axially inside the outer sleeve 23. The nut 28 also comprises an outer thread 31 formed on its outer cylindrical surface 28a. The outer thread 31 is radially opposed to the inner thread 30 formed into the bore of the nut. The outer thread 31 radially protrudes outwards with respect to the outer surface 28a. The outer thread 31 protrudes towards the outer sleeve 23. As will be described later, the nut 28 acts as a rotating nut or as a rotating and translating nut.

The rollers 32 are identical to each other and are distributed regularly around the screw 24. Each roller 32 extends along an axis 32a which is coaxial with the axis 24a of the screw and comprises an outer thread 34 engaging the thread 26 of the screw and the thread 30 of the nut. Each roller 32 also comprises, at each axial end, outer gear teeth 36, 38 extending axially outwards the outer thread 34 and which are themselves extended axially by a cylindrical stud 40, 42 extending outwards. Each gear teeth 36, 38 are axially located between the associated stud 40, 42 and the outer thread 34. The outer thread 34 of each roller is axially located between the two gears 36, 38.

The roller screw mechanism 22 also comprises two annular gear wheels (not referenced) provided on the outer surface of the screw 24 and each comprising outer gear teeth meshing the gear teeth 36, 38 respectively of the rollers 32 for the synchronization thereof. Each gear wheel is axially located near to an end of the outer thread 26 of the screw. Said outer thread 26 is axially located between the two gear wheels. In the disclosed embodiment, the gear wheels are formed directly on the outer surface of the screw 24. Alternatively, the gear wheels may be separate parts which are fixed onto the screw 24.

The mechanism 22 further comprises two annular guides or spacer rings 44, 46 disposed on the outer surface of the screw 24. Said spacer rings 44, 46 are radially disposed between the screw 24 and the inner thread 30 of the nut without contact with said thread. Each spacer ring 44, 46 is mounted on the outer surface of the screw 24 axially next to the associated gear wheel. Each spacer ring 44, 46 is axially offset towards the outside of the nut 28 with regard to the associated gear wheel. Each spacer ring 44, 46 comprises a plurality of cylindrical through-recesses (not referenced) which are distributed regularly in the circumferential direction and inside which the studs 40, 42 of the rollers are housed. The spacer rings 44, 46 enable the rollers 32 to be carried and the regular circumferential spacing thereof to be kept. The mechanism 22 further comprises elastic retainer rings (not referenced) each mounted in a groove formed on the outer surface of the screw 24 in order to axially hold the corresponding spacer ring 44, 46.

Axially on the side opposite to the wheel 20 (Figure 1), a recess 24c is formed on a frontal radial surface of the screw 12 and into which is mounted an end of the valve stem 16 of the gate valve. The valve stem 16 is connected to the screw 24 by any appropriate means, for example by threads and/or a pin.

Referring once again to Figure 1, the outer sleeve 23 is radially disposed between the housing 18 and the nut 28 of the transmission mechanism. The outer sleeve 23 is connected to the wheel 20. The outer sleeve 23 is mounted coaxially about the screw 24. The outer sleeve 23 radially surrounds the roller screw mechanism 22. The sleeve 23 is made in one part. The sleeve 23 extends axially inside the housing 18 and axially protrudes outwards.

The sleeve 23 comprises a cylindrical bore 23a and an opposite outer cylindrical surface 23b. The roller screw mechanism 22 is mounted inside the bore 23a. The outer sleeve 23 comprises an inner thread 50 engaged with the outer thread 31 of the nut 28. In this example, a direct threaded connection is provided between the sleeve 23 and the nut 18. The inner thread 50 is formed into the bore 23a of the sleeve. The inner thread 50 radially protrudes inwards with respect to bore 23a. The shape of the inner thread 50 is complementary to that of the outer thread 31 of the nut. In the disclosed example, the thread 50 is of the acme type. Alternatively, it could be possible to foresee another type of inner thread for the sleeve 23.

The valve operator assembly 10 also comprises rolling bearings 52, 54 to guide the rotation of the outer sleeve 23 with respect to the housing 18. The rolling bearings 52, 54 are radially mounted between the outer surface 23b of the sleeve and the stepped bore 18a of the housing. The rolling bearings 52, 54 are mounted radially in contact with the outer surface 23b of the sleeve and a small diameter portion of the stepped bore 18a of the housing. In the disclosed example, the rolling bearings 52, 54 are angular contact thrust ball bearings and are disposed axially in contact one to another. A retaining ring 56 is secured on the outer surface 23b of the sleeve to axially block the rolling bearings 52, 54. Axially on the opposite side to the ring 56, the rolling bearing 52 is axially mounted against a radial shoulder (not referenced) of the outer surface 23b of the sleeve.

In the disclosed embodiment, the sleeve 23 comprises a shaft portion 60 and an annular tubular portion 62 extending axially from said shaft. The shaft portion 60 and the tubular portion 62 are made in one part. The shaft portion 60 extends axially inside the housing 18 and axially protrudes outwards. The tubular portion 62 extends axially inside the housing 18. A radial gap is provided between the tubular portion 62 and the bore 18a of the housing. The tubular portion 62 is mounted coaxially about the screw 24. The tubular portion 62 delimits the bore 23a and the inner thread 50. The outer surface 23b extends both along the shaft portion 60 and the tubular portion 62. The outer diameter of the shaft portion 60 is smaller than of the tubular portion 62. The rolling bearings 52, 54 are mounted on the shaft portion 60. The outer surface 23b of the sleeve has a stepped form. Alternatively, the outer surface 23b may have different shape.

The rotational drive wheel 20 is directly mounted on the outer sleeve 23 with no interposition of additional element therebetween. The wheel 20 is mounted in direct radial contact with the sleeve 23. The wheel 20 is directly mounted on the outer surface 23b of the sleeve 23. The wheel 20 is directly mounted on a part of the outer surface 23b which is located outside of the housing 18. The wheel 20 is directly mounted on the shaft portion 60 of the sleeve. As will be described later, the wheel 20 is directly secured to the sleeve 23.

The wheel 20 comprises an annular mounting hub 20a directly mounted on the outer surface 23b of the sleeve and an operable rim 20b connected to said hub. The bore of the hub 20a is mounted in radial contact with the outer surface 23b of the sleeve. The bore of the hub 20a forms the bore of the wheel 20. The operable rim 20b has here a circular form. In the illustrated example, the operable rim 20b is adapted to be manually operated. Alternatively, the rim of the wheel 20 may be automatically operated with electric, hydraulic or pneumatic drive. The wheel 20 further comprises a plurality of radial arms or branches 20c connecting the hub 20a to the rim 20b. The branches 20c extend radially outwards from the hub 20a. The wheel 20 is made in one single part.

The valve operator assembly 10 further comprises one key 64 radially provided between the sleeve 23 and the wheel 20 to rotatably connect said sleeve and wheel. The key 64 engages into an axial inner keyway 66 provided on the outer surface 23b of the sleeve, and into a corresponding axial outer keyway 68 formed on the bore of the wheel 20. The keyway 68 of the wheel radially faces the inner keyway 66 of the sleeve. The keyways 66, 68 extend axially. The inner keyway 66 is formed radially inwards from the outer surface 23a of the sleeve. The keyway 66 extends into the thickness of the shaft portion 60 of the sleeve. The keyway 66 is formed on a limited length of the outer surface 23a of the sleeve. Similarly, the outer keyway 68 is formed radially outwards from the bore of the wheel 20. The keyway 68 extends into the thickness of the hub 20a of the wheel. The keyway 68 is formed on a limited length of bore of the hub 20a. The keyways 66, 68 are each shaped in a form of a groove. In the illustrated example, only one key 60 is provided. Alternatively, the number of keys may be increased.

The valve operator assembly 10 also comprises one screw 70 and an associated washer 72 to axially secure the wheel 20 to the sleeve 23. The screw 70 extends axially into the sleeve 23. The screw 70 extends into the shaft portion 60 of the sleeve and is screwed into an inner axial thread (not referenced) made into said portion. The washer 72 is axially provided between a head of the screw and the sleeve 23. The washer 72 axially bears against the sleeve 23 and the wheel 20. In the illustrated example, only one screw 70 is provided. Alternatively, the number of screws may be increased. The key 64, the screw 70 and the washer 72 form locking means provided on the wheel 20 and the sleeve 23 to secure said wheel to the sleeve.

The valve operator assembly 10 further comprises first abutment means for blocking the translation of the screw 24 of the transmission mechanism relative to the nut 28. These abutment means comprise first and second rings 76, 78 secured to the screw 24. The first ring 76 is mounted at one end of the screw 24 while the second ring 78 is mounted on said screw axially on the side opposite to the first ring 74 with respect to the rollers 32. The abutment means also comprise third and fourth rings 80, 82 secured into the bore of the nut 28. Each ring 80, 82 axially faces the associated first or second ring 76, 78. As will be described later, the rings 78, 82 also act as coupling means to connect the screw 24 and the nut 28. Each ring 76 to 82 comprises a translating stop lug which forms rotary abutment.

The valve operator assembly 10 further comprises second abutment means for blocking the translation of the nut 28 with respect to the outer sleeve 23. These abutment means comprise first and second rings 84, 86 secured to the sleeve 23. The first ring 84 is mounted into a hole provided on the shoulder disposed between the shaft portion 60 of the sleeve 23 and the tubular portion 62, while the second ring 86 is mounted at the free end of the bore of said tubular portion 62.

From a position as illustrated on Figure 1, when an operator applies a torque on the wheel 20 in order to drive the screw 24 in a forth direction FD so as to open the gate valve (from right to left on Figure 1), this torque is transmitted directly to the outer sleeve 23. The nut 28 of the roller screw mechanism rotates together with the sleeve 23 without axial translation of said nut. As a matter of fact, the friction torque induced by the direct threaded connection between the sleeve 23 and the nut is 28 adapted to be higher than the friction torque induced by the roller screw mechanism 22.

With such a rotation of the nut 28, the rollers 32 rotate on themselves about the screw 24 and move axially and additionally rotate in the nut 28. The rollers 32 are rotationally guided by outer gear wheels provided on the screw and meshing with the gear teeth of the rollers. Both the rollers 32 and the screw 24 are axially or longitudinally moveable into the nut 28. Accordingly, the rotational motion of the wheel 20 is converted into a displacement of the screw 24 in the forth direction FD. In this example, when the operator applies a counter-clockwise torque on the wheel 20 such a displacement of the screw 24 occurs in that direction since a right hand thread is considered for said screw.

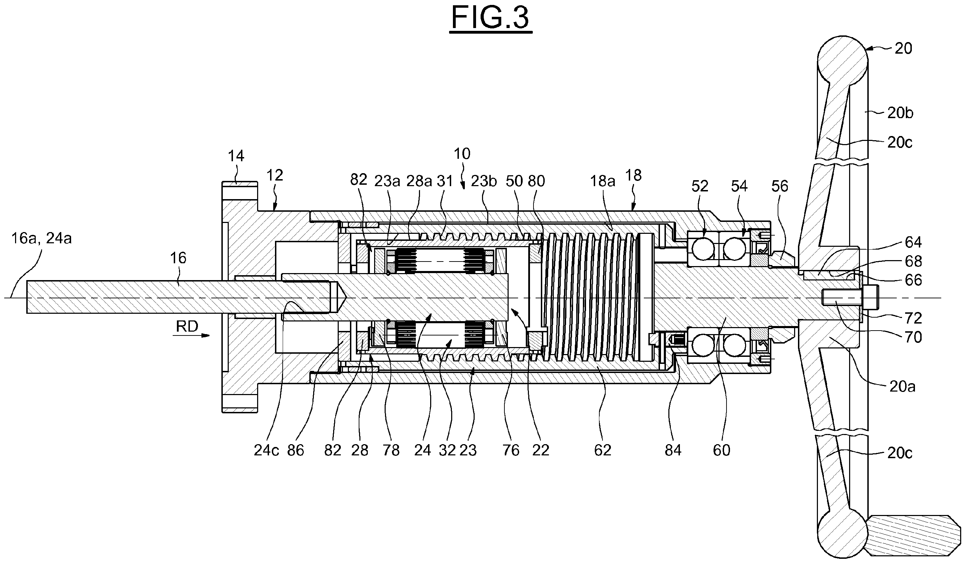

The forth stroke of the screw 24 relative to the nut 28 and to the sleeve 23 is performed until the second ring 78 of the first abutment means secured to said screw abuts against the fourth ring 82 secured to said nut. After that, the roller screw mechanism 22 is blocked and the screw 24 is coupled to the nut 28. Thus, the rotation of the sleeve 23 is transformed into a rotation combined with an axial translation of the nut 28 relative to said sleeve. The nut 28 moves simultaneously both in the axial and circumferential directions with respect to the sleeve 23. The screw 24 keeps on moving axially in the forth direction FD together with the nut 28 relative to the outer sleeve 23. The translation of the nut 28 and the screw 24 is obtained until the fourth ring 82 abuts against the second ring 86 of the second abutment means secured to the housing 18 as shown on Figure 3.

From the position as illustrated on Figure 3, when the operator applies a torque on the wheel 20 in an opposite direction in order to drive the screw 24 in a return direction RD so as to close the gate valve (from left to right on Figure 3), the nut 28 stay coupled in rotation with the screw 24 by the rings 78, 82. The abutting torque induced by these rings is made sufficient to maintain the coupling state. The screw 24 moves axially together with the nut 28 relative to the sleeve 23. The return stroke of the screw 24 is performed until the third ring 80 of the first abutment means secured to the nut 28 abuts against the first ring 84 of the second abutment means secured on the sleeve. After that, since the axial translation of the nut 28 relative to the outer sleeve 23 is blocked, the rollers 32 of the transmission mechanism rotate on themselves about the screw 24 and move axially and additionally rotate in the nut 28. Accordingly, the rotational motion of the outer sleeve 23 is still converted into a displacement of the screw 24 in the return direction RD.

When operating the gate valve, at the beginning of the valve opening and also at the end of the valve closing, the required operating torque on the wheel 20 is limited since the running phase of the screw 24 is obtained with the roller screw mechanism 22. During the other operating runs which require a smaller operating torque, the axial translation of the screw 24 is obtained with the threaded connection between the outer sleeve 23 and the nut 28. The number of turns required on the wheel 20 is thus minimized during these other operating runs.

The assembly 10 could also be adapted in case other sequences are expected, for instance low torque at the end of opening stroke and/or low torque at the beginning of the closing stroke.

In the described example, the wheel is connected or coupled directly to the outer sleeve with a key and a screw. Alternatively, it could be possible to foresee another type of direct connection between the wheel and the outer sleeve, for example by splines or teeth provided on the outer surface of the sleeve and extending into corresponding grooves formed into the bore of the wheel. In another variant, the wheel may be directly secured to the outer sleeve by any other appropriate means, for instance by screwing, press-fitting, gluing, welding, pins, or clamping system etc.

The invention has been illustrated on the basis of a valve operator assembly for gate valve comprising an inverted roller screw mechanism. The invention can also be applied to a valve operator assembly having other type of roller screw mechanism such as standard planetary roller screw mechanism. The invention can also be applied to a valve operator assembly having a standard or an inverted ball screw mechanism. Otherwise, the invention can also be applied to a valve operator assembly having other type of transmission mechanism adapted to convert a rotation into a linear movement, for instance a direct threaded connection. In this case, the outer thread of the screw engages directly the inner thread of the nut without interposition of rolling elements. In this case, the pitch between the two screws would need to be different so that each of them have has a different frictional torque under the same external force. However, such transmission mechanism requires large actuation forces. More generally, the design can be made with two screws of any type (roller screws, ball screws, friction screws) in whatever arrangement, inside/outside, as long as one has a higher friction than the other under the same external force. Then the one with the lowest friction starts first unless it is blocked.

Although the invention has been illustrated on the basis of a valve operator assembly for gate valve, it should be understood that the invention can also be used with other types of valves, for instance control or regulation valves or choke valves. The wheel may be operable manually or automatically for example with electric, hydraulic or pneumatic drive. The valve operator assembly may be used for instance with a surface gate or a subsea valve gate which may be actuated by a remote operating vehicle (ROV) torque tool or an actuator.

## Claims

1. Valve operator assembly for valve comprising a valve body and a valve translating member axially moveable, the assembly comprising a housing (18) adapted to be mounted on the valve, an operable wheel (20) rotatably mounted with respect to said housing, and a transmission mechanism (22) comprising a translating screw (24) adapted to be connected to the valve translating member of the valve and provided with an outer thread (26), and a rotating nut (28) surrounding and coaxial with said screw, said nut being provided with an inner thread (30), said transmission mechanism being adapted to convert rotation of said nut into axial translation of said screw, **characterized in that** the assembly further comprises an outer sleeve (23) radially disposed between the housing (18) and the nut (28) of the transmission mechanism and provided with an inner thread (50) cooperating with an outer thread (31) provided on said nut, the wheel (20) being directly mounted on the outer sleeve (23).

2. Valve operator assembly according to claim 1, wherein the outer sleeve (23) comprises a shaft portion (60) onto which is directly mounted the wheel (20) and a tubular portion (62) extending from said shaft and provided with the inner thread (50), said shaft and tubular portions being formed in one part.

3. Valve operator assembly according to claim 1 or 2, wherein the wheel (20) is directly mounted on the outer surface (23b) of the outer sleeve.

4. Valve operator assembly according to claim 3, wherein the wheel (20) is directly mounted on a part of the outer surface (23b) which is located outside of the housing (18).

5. Valve operator assembly according to any of the preceding claims, wherein the wheel (20) comprises a mounting hub (20a) directly mounted on the outer sleeve (23) and an operable rim (20b) connected to said hub.

6. Valve operator assembly according to any of the preceding claims, wherein the wheel (20) is a hand-wheel.

7. Valve operator assembly according to any of the preceding claims, further comprising locking means (64, 70, 72) disposed on the outer sleeve (23) and the wheel (20) to secure said wheel to the outer sleeve.

8. Valve operator assembly according to claim 7, wherein the locking means comprise at least one key (64) engaged in an inner keyway (66) of the outer sleeve and in a corresponding outer keyway (68) of the wheel.

9. Valve operator assembly according to claim 7 or 8, wherein the locking means comprise at least one screw (70) extending at least into the outer sleeve (23).

10. Valve operator assembly according to any of the preceding claims, wherein the friction torque induced by the transmission mechanism (22) is smaller than the friction torque induced by the connection between the nut (28) of said mechanism and the outer sleeve (23).

11. Valve operator assembly according to any of the preceding claims, further comprising abutment and coupling means (78, 82) for blocking the translation of the screw (24) of the transmission mechanism relative to the nut (28) and maintaining a coupling state between said nut and said screw (24).

12. Valve operator assembly according to claim 11, wherein the abutment and coupling means (78, 82) are secured onto the screw and the nut.

13. Valve operator assembly according to any of the preceding claims, further comprising abutment means (80, 84, 82, 86) provided for blocking the translation of the nut (24) of the transmission mechanism relative to the outer sleeve (23).

14. Valve operator assembly according to any of the preceding claims, wherein the transmission mechanism (22) further comprises rolling elements (32) radially provided between the outer thread of the screw and the inner thread of the nut.

15. Valve comprising a valve body, a valve translating member (16) axially moveable and a valve operator assembly (10) according to any of the preceding claims.

## Patentansprüche

1. Ventilbetätigungsanordnung für ein Ventil, das einen Ventilkörper und ein axial bewegbares Ventilübersetzungselement umfasst, wobei die Anordnung Folgendes umfasst: ein Gehäuse (18), das dazu ausgelegt ist, an dem Ventil montiert zu sein, ein betätigbares Rad (20), das in Bezug auf das Gehäuse drehbar montiert ist, und einen Übertragungsmechanismus (22), der eine Übersetzungsschraube (24) umfasst, die dazu ausgelegt ist, mit dem Ventilübersetzungselement des Ventils verbunden zu werden und mit einem Außengewinde (26) versehen ist, und eine drehende Mutter (28), welche die Schraube umgibt und koaxial zu ihr verläuft, wobei die Mutter mit einem Innengewinde (30) versehen ist, wobei der Übertragungsmechanismus dazu ausgelegt ist, eine Drehung der Mutter in axiale Übersetzung der Schraube umzuwandeln, **dadurch gekennzeichnet, dass** die Anordnung ferner eine äußere Hülse (23) umfasst, die radial zwischen dem Gehäuse (18) und der Mutter (28) des Übertragungsmechanismus angeordnet und mit einem Innengewinde (50), das mit einem an der Mutter vorgesehenen Außengewinde (31) zusammenwirkt, versehen ist, wobei das Rad (20) direkt auf der äußeren Hülse (23) montiert ist.

2. Ventilbetätigungsanordnung nach Anspruch 1, wobei die äußere Hülse (23) einen Wellenabschnitt (60) umfasst, auf dem das Rad (20) direkt montiert ist, und sich ein röhrenförmiger Abschnitt (62) von der Welle erstreckt und mit dem Innengewinde (50) versehen ist, wobei die Welle und die röhrenförmigen Abschnitte in einem Teil ausgebildet sind.

3. Ventilbetätigungsanordnung nach Anspruch 1 oder 2, wobei das Rad (20) direkt auf der äußeren Oberfläche (23b) der äußeren Hülse montiert ist.

4. Ventilbetätigungsanordnung nach Anspruch 3, wobei das Rad (20) direkt auf einem Teil der äußeren Oberfläche (23b) montiert ist, die sich außerhalb des Gehäuses (18) befindet.

5. Ventilbetätigungsanordnung nach einem der vorangehenden Ansprüche, wobei das Rad (20) eine Montagenabe (20a) umfasst, die direkt an der äußeren Hülse (23) montiert ist, und einen betätigbaren Rand (20b), der mit der Nabe verbunden ist.

6. Ventilbetätigungsanordnung nach einem der vorangehenden Ansprüche, wobei das Rad (20) ein Handrad ist.

7. Ventilbetätigungsanordnung nach einem der vorangehenden Ansprüche, die ferner Sperrmittel (64, 70, 72) umfasst, die auf der äußeren Hülse (23) und dem Rad (20) angeordnet sind, um das Rad an der äußeren Hülse zu sichern.

8. Ventilbetätigungsanordnung nach Anspruch 7, wobei die Sperrmittel mindestens einen Schlüssel (64) umfassen, der in eine innere Keilnut (66) der äußeren Hülse und in eine entsprechende äußere Keilnut (68) des Rades eingreift.

9. Ventilbetätigungsanordnung nach Anspruch 7 oder 8, wobei die Sperrmittel mindestens eine Schraube (70) umfassen, die sich mindestens in die äußere Hülse (23) erstreckt.

10. Ventilbetätigungsanordnung nach einem der vorangehenden Ansprüche, wobei das durch den Übertragungsmechanismus (22) herbeigeführte Reibungsdrehmoment kleiner als das von der Verbindung zwischen der Mutter (28) des Mechanismus und der äußeren Hülse (23) herbeigeführte Reibungsdrehmoment ist.

11. Ventilbetätigungsanordnung nach einem der vorangehenden Ansprüche, die ferner Anschlag- und Kopplungsmittel (78, 82) zum Blockieren der Übersetzung der Schraube (24) des Übertragungsmechanismus relativ zu der Mutter (28) und Aufrechterhalten eines Kopplungsstatus zwischen der Mutter und der Schraube (24) umfasst.

12. Ventilbetätigungsanordnung nach Anspruch 11, wobei die Anschlag- und Kopplungsmittel (78, 82) auf der Schraube und der Mutter gesichert sind.

13. Ventilbetätigungsanordnung nach einem der vorangehenden Ansprüche, die ferner Anschlagmittel (80, 84, 82, 86) umfasst, die für ein Blockieren der Übersetzung der Mutter (24) des Übertragungsmechanismus relativ zu der äußeren Hülse (23) bereitgestellt sind.

14. Ventilbetätigungsanordnung nach einem der vorangehenden Ansprüche, wobei der Übertragungsmechanismus (22) ferner Rollenelemente (32) umfasst, die zwischen dem Außengewinde der Schraube und dem Innengewinde der Mutter bereitgestellt sind.

15. Ventil, das einen Ventilkörper, ein axial bewegbares Ventilübersetzungselement (16) und eine Ventilbetätigungsanordnung (10) nach einem der vorangehenden Ansprüche umfasst.

## Revendications

1. Ensemble actionneur de soupape pour soupape comprenant un corps de soupape et un élément de translation de soupape mobile axialement, l'ensemble comprenant un boîtier (18) adapté pour être monté sur la soupape, une roue manipulable (20) montée de manière rotative par rapport au boîtier, et un mécanisme de transmission (22) comprenant une vis à filet contraire (24) adaptée pour être connectée à l'élément de translation de soupape de la soupape et munie d'un filetage extérieur (26) et un écrou rotatif (28) circonvoisin et coaxial avec la vis, ledit écrou étant pourvu d'un filetage intérieur (30), ledit mécanisme de transmission étant adapté pour transformer la rotation dudit écrou en une translation axiale de ladite vis, **caractérisé en ce que** l'ensemble comprend en outre un manchon extérieur (23) disposé radialement entre le boîtier (18) et l'écrou (28) du mécanisme de transmission et pourvu d'un filetage intérieur (50) coopérant avec un filetage extérieur (31) prévu sur ledit écrou, la roue (20) étant montée directement sur le manchon extérieur (23).

2. Ensemble actionneur de soupape selon la revendication 1, dans lequel le manchon extérieur (23) comprend une partie d'arbre (60) sur laquelle est montée directement la roue (20) et une partie tubulaire (62) s'étendant à partir dudit arbre et munie du filetage intérieur (50), ledit arbre et lesdites parties tubulaires étant formés en une pièce.

3. Ensemble actionneur de soupape selon la revendication 1 ou 2, dans lequel la roue (20) est montée directement sur la surface extérieure (23b) du manchon extérieur.

4. Ensemble actionneur de soupape selon la revendication 3, dans lequel la roue (20) est montée directement sur une partie de la surface extérieure (23b) qui est située à l'extérieur du boîtier (18).

5. Ensemble actionneur de soupape selon l'une quelconque des revendications précédentes, dans lequel la roue (20) comprend un moyeu de montage (20a) monté directement sur le manchon extérieur (23) et une jante manipulable (20b) reliée audit moyeu.

6. Ensemble actionneur de soupape selon l'une quelconque des revendications précédentes, dans lequel la roue (20) est un volant.

7. Ensemble actionneur de soupape selon l'une quelconque des revendications précédentes, comprenant en outre des moyens de verrouillage (64, 70, 72) disposés sur le manchon extérieur (23) et la roue (20) pour fixer ladite roue au manchon extérieur.

8. Ensemble actionneur de soupape selon la revendication 7, dans lequel les moyens de verrouillage comprennent au moins une clavette (64) engagée dans une rainure de clavette intérieure (66) du manchon extérieur et dans une rainure de clavette extérieure (68) correspondante de la roue.

9. Ensemble actionneur de soupape selon la revendication 7 ou 8, dans lequel les moyens de verrouillage comprennent au moins une vis (70) s'étendant au moins dans le manchon extérieur (23).

10. Ensemble actionneur de soupape selon l'une quelconque des revendications précédentes, dans lequel le couple de frottement induit par le mécanisme de transmission (22) est inférieur au couple de frottement induit par la liaison entre l'écrou (28) dudit mécanisme et le manchon extérieur (23).

11. Ensemble actionneur de soupape selon l'une quelconque des revendications précédentes, comprenant en outre des moyens de butée et d'accouplement (78, 82) pour bloquer la translation de la vis (24) du mécanisme de transmission par rapport à l'écrou (28) et maintenir un état de couplage entre ledit écrou et ladite vis (24).

12. Ensemble actionneur de soupape selon la revendication 11, dans lequel les moyens de butée et d'accouplement (78, 82) sont fixés sur la vis et l'écrou.

13. Ensemble actionneur de soupape selon l'une quelconque des revendications précédentes, comprenant en outre des moyens de butée (80, 84, 82, 86) prévus pour bloquer la translation de l'écrou (24) du mécanisme de transmission par rapport au manchon extérieur (23).

14. Ensemble actionneur de soupape selon l'une quelconque des revendications précédentes, dans lequel le mécanisme de transmission (22) comprend en outre des éléments roulants (32) disposés radialement entre le filetage extérieur de la vis et le filetage intérieur de l'écrou.

15. Soupape comprenant un corps de soupape, un élément de translation de soupape (16) mobile axialement et un ensemble actionneur de soupape (10) selon l'une quelconque des revendications précédentes.
